# EUROPÄISCHE PATENTANMELDUNG

(11) **EP 4 628 798 A1**
(43) Veröffentlichungstag der Anmeldung: **08.10.2025**
(21) Anmeldenummer: 25156788.9
(22) Anmeldetag: 25.03.2024
(51) Int. Cl.: F24C 15/16, F24C 7/08, F25D 23/06, F25D 25/02

(54) **EINHÄNGEGESTELL ZUM EINSCHIEBEN VON LEBENSMITTELTRÄGERN, LEBENSMITTELBEHANDLUNGSGERÄT UND VERFAHREN ZUM BETRIEB DES LEBENSMITTELBEHANDLUNGSGERÄTES**

(62) Teilanmeldung aus: 24165756.8
(71) Anmelder: WELBILT Deutschland GmbH, 82436 Eglfing (DE)
(72) Erfinder: WILD, Hannes, 82418 Riegsee (DE)
(74) Vertreter: Hoefer & Partner Patentanwälte mbB

(57) **Zusammenfassung**

Die Erfindung betrifft ein Verfahren (200) zum Betrieb eines Lebensmittelbehandlungsgerätes (100), wobei das Verfahren folgende Schritte umfasst: Erkennen einer Einschubhöhe eines in das Einhängegestell (1) eingeschobenen Lebensmittelträgers oder aus dem Einhängegestell (1) entnommenen Lebensmittelträgers mittels einer Kamera (107) und/oder eines Abstandssensors (110) in Verbindung mit einer Steuergeräteanordnung (103), Erkennen der Art des eingeschobenen Lebensmittelträgers mittels der Kamera (107) und/oder des Abstandssensors (110), Zuordnen, mittels der Steuergeräteanordnung (103), der Einschubzone (4.1 bis 4.6) zum eingeschobenen oder entnommenen Lebensmittelträger basierend auf der erkannten Einschubhöhe und Zuordnen, mittels der Steuergeräteanordnung (103), des eingeschobenen oder entnommenen Lebensmittelträgers zum verwendeten Einschub (6.1 bis 6.3), Anzeigen des zugordneten Einschubs (6.1 bis 6.3) und/oder der zugeordneten Einschubzone (4.1 bis 4.6).

## Beschreibung

Die Erfindung betrifft ein Verfahren zum Betrieb eines Lebensmittelbehandlungsgerätes.

Aus dem Stand der Technik sind unterschiedliche Lebensmittelbehandlungsgeräte, beispielsweise Gargeräte, bekannt. Diese Geräte weisen einen Lebensmittelaufnahmeraum auf, in dem ein Einhängegestell vorgesehen ist. In das Einhängegestell können auf unterschiedlichen Höhen Lebensmittelträger, beispielsweise Bleche, in entsprechende Einschübe eingeschoben werden.

Es ist Aufgabe vorliegender Erfindung ein Verfahren zum Betrieb eines Lebensmittelbehandlungsgerätes anzugeben, das eine möglichst genaue Erkennung der Einschubposition ermöglicht.

Die Lösung dieser Aufgabe erfolgt durch die Merkmale der unabhängigen Ansprüche. Die abhängigen Ansprüche haben bevorzugte Ausgestaltungen der Erfindung zum Gegenstand.

Offenbart ist ein Einhängegestell zum Einschieben von Lebensmittelträgern in einen Lebensmittelaufnahmeraum. Der Lebensmittelaufnahmeraum ist insbesondere der Innenraum eines Lebensmittelbehandlungsgerätes. Bei diesem Gerät handelt es sich beispielsweise um ein Gargerät, Warmhaltegerät oder Kühlgerät. Allerdings kann der Lebensmittelaufnahmeraum auch Bestandteil einer Vorrichtung zum Aufbewahren der Lebensmittel sein, beispielsweise eine Art Schrank oder Regal, in das die Lebensmittelträger eingeschoben werden können.

Das Einhängegestell umfasst mehrere übereinander angeordnete Einschubzonen, wobei jede Einschubzone zumindest einen Einschub aufweist. Jeder Einschub umfasst ein Paar aus zwei gegenüberliegenden Einschubelementen auf gleicher Höhe. Auf den Oberseiten der Einschubelemente werden die gegenüberliegenden Ränder des Lebensmittelträgers aufgelegt. Somit dient der Einschub bzw. die gegenüberliegenden Paare an Einschubelementen zum Einschieben eines Lebensmittelträgers.

Bei dem Lebensmittelträger handelt es sich insbesondere um ein Blech oder Gastronormbehälter, welche eine standardisierte Geometrie aufweisen. Hierbei sind speziell die gängigen Behälter nach sogenannten "Gastro-Norm-System" bekannt. Diese werden in der Gastronomie als Standard verwendet und basieren auf Normgrößen, die in einschlägigen DIN, ISO, EN und US Normen definiert sind. Problematisch ist allerdings, dass minimal unterschiedliche Geometrien zwischen den gängigen DIN, EN und ISO Normen und den bekannten US amerikanischen Normen vorhanden sind. Das hier beschriebene Einhängestell geht speziell auf die unterschiedlichen horizontalen Abstände ein.

Die Einschubelemente sind vorzugsweise Stangen, insbesondere rund und/oder aus Edelstahl. Alternativ können die Einschubelemente insbesondere aus L-förmigen Blechwinkeln hergestellt werden. Bei den Einschubelementen handelt es sich vorzugsweise um fest angeordnete Elemente, also insbesondere nicht um Schubläden oder andere, bewegliche Elemente.

Das Einhängegestell umfasst vorzugsweise ein linkes und ein rechtes Gestellteil, wobei jeder Einschub ein Einschubelement im linken Gestellteil und ein Einschubelement im rechten Gestellteil umfasst. Die beiden Gestellteile des Einhängegestells sind vorzugsweise zwei voneinander unabhängige Bauteile, die jeweils an die gegenüberliegenden Innenflächen des Lebensmittelaufnahmeraums, insbesondere an die Innenseiten einer Innenraumwandung des Lebensmittelbehandlungsgerätes, befestigt werden können. Alternativ hierzu kann das Einhängegestell auch integraler Bestandteil der Innenraumwandung des Lebensmittelaufnahmeraums sein; beispielsweise durch eine entsprechende Kontur an einer Innenwandung.

Zumindest zwei der Einschubzonen des Einhängegestells sind als sogenannte "vollständige Einschubzonen" ausgebildet. Als optionale Ausgestaltung des Einhängegestells werden noch sogenannte "Teil-Einschubzonen" beschrieben. Vorzugsweise sind zumindest drei, insbesondere zumindest vier der Einschubzonen als "vollständige Einschubzonen" ausgebildet.

Jede vollständige Einschubzone umfasst zumindest einen ersten Einschub und einen zweiten Einschub. Als eine optionale Ausgestaltung wird noch ein dritter Einschub beschrieben. Besonders bevorzugt umfasst die jeweilige vollständige Einschubzone ausschließlich den ersten Einschub und den zweiten Einschub oder ausschließlich den ersten Einschub, den zweiten Einschub und den dritten Einschub.

Bei jedem ersten Einschub haben die gegenüberliegenden Einschubelemente einen ersten horizontalen Abstand zueinander. Bei jedem zweiten Einschub haben die gegenüberliegenden Einschubelemente einen zweiten horizontalen Abstand zueinander. Bevorzugt ist vorgesehen, dass der erste horizontale Abstand größer ist als der zweite horizontale Abstand.

Vorliegend beziehen sich horizontalen Abstände stets auf den lichten Abstand. Richtungsangaben und Ausrichtungen beziehen sich stets auf die übliche Verwendung des Einhängegestells in dem Lebensmittelaufnahmeraum. So erstrecken sich die einzelnen Einschubelemente in horizontaler Richtung von einer Vorderseite zu einer Rückseite. Die Vorderseite bezeichnet die Seite des Einhängegestells, an der die Lebensmittelträger angesetzt und eingeschoben werden. Die Vorderseite des Einhängegestells befindet sich bei dessen Benutzung an einer Öffnung des Lebensmittelaufnahmeraums.

Für die Aufbewahrung und Behandlung von Lebensmitteln werden üblicherweise unterschiedliche Lebensmittelträger, insbesondere Bleche oder Gastronormbehälter, verwendet. Diese Lebensmittelträger weisen einen Rand auf, der mit entsprechender Tiefe in einen Boden des Lebensmittelträgers übergeht. Die Ränder des Lebensmittelträgers kommen auf den Einschubelementen zum Aufliegen. Zwischen den gegenüberliegenden Einschubelementen muss der Lebensmittelträger entsprechend Platz finden. Die unterschiedlichen Lebensmittelträger können unterschiedliche Breiten aufweisen; vorliegend ist insbesondere von Interesse, dass die Lebensmittelträger am Übergang vom Rand zum Boden eine seitliche Wandung aufweisen. Der Abstand dieser Wandungen bestimmt insbesondere die hier relevante Breite des Lebensmittelträgers. Ein breiter Lebensmittelträger kann somit in den ersten Einschub und schmälerer Lebensmittelträger in den zweiten Einschub eingeschoben werden, da der erste horizontale Abstand größer ist als der zweite horizontale Abstand.

Durch die Anordnung der Einschübe in einzelne Einschubzonen ist die Benutzung des Einhängegestells für den Benutzer möglichst einfach gestaltet. Der Benutzer muss grundsätzlich nur auswählen, in welche Einschubzone der Lebensmittelträger einzuschieben ist. Innerhalb der Einschubzone findet der Benutzer dann den jeweils passenden Einschub für die jeweilige Art von Lebensmittelträger.

Vorzugsweise befindet sich der erste Einschub über dem zweiten Einschub. Die Reihenfolge kann aber auch vertauscht sein, sodass sich der zweite Einschub über dem ersten Einschub befindet.

Wie bereits erwähnt ist bevorzugt vorgesehen, dass jede vollständige Einschubzone einen dritten Einschub aufweist, bei dem die gegenüberliegenden Einschubelemente einen dritten horizontalen Abstand zueinander haben. Bei Verwendung von drei Einschüben befindet sich der zweite Einschub vorzugsweise zwischen dem ersten Einschub und dem dritten Einschub. Der erste Einschub ist somit oben, der zweite Einschub in der Mitte, der dritte Einschub unten. Alternativ ist der zweite Einschub oben, der erste Einschub in der Mitte, der dritte Einschub unten.

Der zweite horizontale Abstand ist vorzugsweise gleich dem dritten horizontalen Abstand. So können in den zweiten Einschub und in den dritten Einschub Lebensmittelträger mit gleicher Breite eingeschoben werden. Berücksichtigt wird vorliegend auch, dass Lebensmittelträger unterschiedliche Tiefen (gemessen in vertikaler Richtung) aufweisen können. Beispielsweise kann ein Lebensmittelträger relativ flach sein und somit von seinem Rand bis zu seinem Boden lediglich eine Tiefe von 1 bis 2 cm aufweisen. Es gibt jedoch auch tiefere Lebensmittelträger, die beispielsweise eine Tiefe von 6,5 cm aufweisen. Diese tieferen Lebensmittelträger werden vorzugsweise in den zweiten Einschub eingeschoben und befinden sich damit etwas höher, als wenn sie in den dritten Einschub eingeschoben werden. Dadurch ragen die tieferen Lebensmittelträger nicht oder nicht so weit in die darunterliegende Einschubzone. So ist es beispielsweise möglich, in einer Einschubzone in den zweiten Einschub einen tiefen Lebensmittelträger einzuschieben, wobei in der darunterliegenden Einschubzone ausreichend Platz bleibt, um dort ebenfalls einen Lebensmittelträger einzuschieben.

Bevorzugt ist vorgesehen, dass die Einschubelemente des zweiten Einschubs einer jeden Einschubzone, sofern die Einschubzone einen zweiten Einschub umfasst, weiter nach vorne, also in Richtung der Öffnung des Lebensmittelaufnahmeraums, ragen, als die Einschubelemente des ersten Einschubs und, sofern ein dritter Einschub in der Einschubzone verwendet wird, als die Einschubelemente des dritten Einschubs. Bei dem zweiten Einschub, der sich bei einer vollständigen Einschubzone mittig befindet, handelt es sich um den bevorzugt zu verwendenden Einschub. Um den Benutzer dahingehend zu leiten, diesen zweiten Einschub zu verwenden und um das Auflegen des Lebensmittelträgers zu erleichtern, ragen die Einschubelemente des zweiten Einschubs bevorzugt weiter nach vorne, als die Einschubelemente der anderen Einschübe.

Hierzu ist insbesondere vorgesehen, dass das Einhängegestell beidseitig, also insbesondere im rechten Gestellteil und im linken Gestellteil, ein vertikales erstes Halteelement umfasst und ein vertikales zweites Halteelement. Das vertikale erste Halteelement befindet sich weiter hinten als das vertikale zweite Halteelement. An dem ersten Halteelement sind vorzugsweise die vorderen Enden der Einschubelemente des ersten Einschubs und/oder des dritten Einschubs befestigt. Am zweiten Halteelement sind vorzugsweise die vorderen Enden der Einschubelemente des zweiten Einschubs befestigt.

Bei den Halteelementen handelt es sich insbesondere, genauso wie bei den Einschubelementen, um Stangen aus Metall. Entsprechend können die Halteelemente und die Einschubelemente miteinander verschweißt sein. Das Einhängegestell kann zusätzlich zu den beiden beschriebenen Halteelementen noch weitere, insbesondere vertikale, Halteelemente umfassen, um die einzelnen Einschubelemente miteinander fest zu verbinden.

Im Folgenden werden vertikale Abstände definiert. Diese werden stets zu den Oberseiten der einzelnen Einschubelemente gemessen, also zu den Seiten bzw. Flächen, auf denen der Lebensmittelträger aufliegt.

Bevorzugt ist ein vertikaler Zonenabstand benachbarter Einschubzonen definiert. Dieser Zonenabstand beschreibt den Abstand des obersten Einschubs einer Einschubzone zum untersten Einschub der darüberliegenden Einschubzone. Der vertikale Zonenabstand ist bevorzugt größer, insbesondere um zumindest das 1,3-fache, als jeder vertikale Einschubabstand zwischen benachbarten Einschüben innerhalb der Einschubzonen. Die Einschübe innerhalb der Einschubzonen liegen somit näher zusammen, als die Einschubzonen voneinander beabstandet sind. Dadurch ist eine klare optische Unterscheidung der Einschubzonen voneinander möglich.

Vorzugsweise umfasst das Einhängegestell eine obere Teil-Einschubzone und/oder eine untere Teil-Einschubzone. Dabei ist vorgesehen, dass die Teil-Einschubzonen zusätzlich zu den zumindest zwei vollständigen Einschubzonen vorgesehen sind.

Die obere Teil-Einschubzone weist weniger Einschübe auf als jede einzelne vollständige Einschubzone. Besonders bevorzugt ist vorgesehen, dass die obere Teil-Einschubzone lediglich einen Einschub, nämlich den beschriebenen dritten Einschub aufweist.

Die untere Teil-Einschubzone weist ebenfalls weniger Einschübe auf als jede einzelne vollständige Einschubzone. Insbesondere ist vorgesehen, dass die untere Teil-Einschubzone lediglich den ersten Einschub und den zweiten Einschub aufweist.

Durch eine oder beide Teil-Einschubzonen am unteren bzw. oberen Ende des Einhängegestells kann der vorhandene Platz in dem Lebensmittelaufnahmeraum optimal ausgenutzt werden.

Vorzugsweise umfasst das Einhängegestell eine vertikale Markierungsleiste an der Vorderseite mit Markierungen zur optischen Identifikation und Unterscheidung der einzelnen Einschubzonen durch den Benutzer. Dabei ist insbesondere vorgesehen, dass lediglich die Einschubzonen, jedoch nicht die einzelnen Einschübe, mit entsprechenden Markierungen versehen sind. Bei den Markierungen handelt es sich insbesondere um Zahlen. Die Markierungsleiste ist insbesondere ein Blechstreifen. Dieser Blechstreifen weist bevorzugt ausgeschnittene oder aufgedruckte Markierungen, insbesondere Zahlen, auf.

Ferner offenbart ist ein Lebensmittelbehandlungsgerät. Dabei handelt es sich insbesondere um ein Gargerät, ein Kühlgerät oder ein Warmhaltegerät. Das Lebensmittelbehandlungsgerät weist den Lebensmittelaufnahmeraum und das beschriebene Einhängegestell auf, das sich im Lebensmittelaufnahmeraum befindet. Das Einhängegestell ist vorzugsweise werkzeuglos in den Lebensmittelaufnahmeraum einsetzbar und wieder lösbar, so dass der Lebensmittelaufnahmeraum einfach gereinigt werden kann.

Der Lebensmittelaufnahmeraum weist eine Öffnung auf. Diese Öffnung ist vorzugsweise durch eine Tür des Lebensmittelbehandlungsgerätes verschließbar. Über diese Öffnung werden die Lebensmittelträger in das Einhängegestell eingeschoben. Optionale Ausgestaltungen des Einhängegestells, wie sie in vorliegender Beschreibung und/oder in den Ansprüchen beschrieben sind, finden entsprechend vorteilhafte Anwendung für das Lebensmittelbehandlungsgerät.

Die Erfindung umfasst ein Verfahren zum Betrieb eines Lebensmittelbehandlungsgerätes mit einem Einhängegestell. Bei dem Einhängegestell handelt es sich insbesondere um das in dieser Beschreibung und/oder in den Ansprüchen beschriebene Einhängegestell.

Das Einhängegestell, welches im Rahmen des Verfahrens Verwendung findet, befindet sich im Lebensmittelaufnahmeraum. Das Einhängegestell weist mehrere der übereinander angeordneten Einschubzonen auf, wobei zumindest zwei der Einschubzonen jeweils einen ersten Einschub zum Einschieben eines Lebensmittelträgers einer ersten Art und einen unter oder über dem ersten Einschub angeordneten zweiten Einschub zum Einschieben eines Lebensmittelträgers einer zweiten Art umfasst. Wie im Rahmen des Einhängegestells beschrieben, kann die einzelne Einschubzone insbesondere auch den dritten Einschub aufweisen. Des Weiteren ist insbesondere vorgesehen, dass der Zonenabstand benachbarter Einschubzonen größer ist als jeder vertikale Einschubabstand zwischen benachbarten Einschüben innerhalb der Einschubzonen.

Im Rahmen des Verfahrens soll möglichst genau erkannt werden, in welchen Einschub ein Lebensmitteträger eingeschoben wird und/oder aus welchem Einschub der Lebensmittelträger entnommen wird. Dabei ist es nicht von entscheidender Bedeutung, dass der Einschub zu 100 Prozent genau erkannt wird. Es soll lediglich mit ausreichender Wahrscheinlichkeit bestimmt werden, in welchen Einschub der Lebensmittelträger eingeschoben oder entnommen wird. Hierzu sind folgende Schritte des Verfahrens vorgesehen:
Das Verfahren sieht insbesondere vor, dass ein Lebensmittelträger, insbesondere ein Blech, mit darauf angeordneten Lebensmitteln, in das Einhängegestell eingeschoben oder aus dem Einhängegestell entnommen wird. Ferner sieht das Verfahren vor, dass eine Kamera und/oder ein Abstandssensor vorgesehen sind, die mit einer Steuergeräteanordnung zum Datenaustausch verbunden ist/sind. Die Kamera und/oder der Abstandssensor befinden sich vorzugsweise am Lebensmittelbehandlungsgerät.

Bei der Steuergeräteanordnung kann es sich um ein einzelnes Steuergerät mit einer oder mehreren Recheneinheiten handeln. Allerdings umfasst der Begriff Steuergeräteanordnung auch mehrere Steuergeräte und/oder unterschiedliche Recheneinheiten, die miteinander vernetzt sind. Die Steuergeräteanordnung kann sich teilweise oder vollständig auch außerhalb des Lebensmittelbehandlungsgerätes, beispielsweise in einem Server befinden.

Das Verfahren sieht ein Erkennen einer Einschubhöhe eines in das Einhängegestell eingeschobenen Lebensmittelträgers oder eines aus dem Einhängegestell entnommenen Lebensmittelträgers mittels der Kamera und/oder des Abstandssensors in Verbindung mit der Steuergeräteanordnung vor. Dies erfolgt insbesondere während der Lebensmittelträger in den Lebensmittelaufnahmeraum eingeschoben oder aus dem Lebensmittelraum entnommen wird. Beim Erkennen der Einschubhöhe wird insbesondere erfasst, wie weit der Lebensmittelträger von der Kamera bzw. dem Abstandssensor entfernt ist. Wenn kein eigener Abstandssensor verwendet wird, so kann diese Einschubhöhe bzw. der Abstand auch über das Kamerabild ermittelt werden. Der Steuergeräteanordnung ist hierzu beispielsweise die Breite des Lebensmittelaufnahmeraums bzw. die Breite dazu passender Lebensmittelträger bekannt. In dem Kamerabild ist die Gesamtbreite des Lebensmittelträgers erkennbar; erscheint diese Breite auf dem Kamerabild entsprechend groß, so ist der Abstand zur Kamera entsprechend klein, wohingegen wenn die Breite des Lebensmittelträgers auf dem Kamerabild klein ist, so ist der Abstand zur Kamera entsprechend größer. Unter diesen Voraussetzungen kann aus dem Kamerabild der Abstand zur Kamera ermittelt werden. Es sind jedoch auch andere Methoden möglich, um mittels der Kamera den Abstand zum eingeschobenen Lebensmittelträger und somit die Einschubhöhe zumindest näherungsweise zu erkennen.

Ferner ist vorgesehen, dass die Art des eingeschobenen Lebensmittelträgers mittels der Kamera und/oder des Abstandssensors in Verbindung mit der Steuergeräteanordnung erkannt wird. Insbesondere erfolgt dies während der Lebensmittelträger in den Lebensmittelaufnahmeraum eingeschoben wird. Methoden zum Erkennen der Art des eingeschobenen oder entnommenen Lebensmittelträgers werden noch genauer erläutert.

Bei dem Verfahren wird berücksichtigt, dass das Erkennen der Einschubhöhe unter Umständen nicht so genau erfolgen kann, so dass der jeweilige Einschub innerhalb einer Einschubzone identifiziert werden kann. Versuche haben jedoch ergeben, dass durch Erkennen der Einschubhöhe zumindest identifiziert werden kann, in welche Einschubzone eingeschoben wird. Die genaue Zuordnung zum Einschub innerhalb der Einschubzone kann erfolgen, indem berücksichtigt wird, welche Art von Lebensmittelträger eingeschobenen oder entnommen wird. Wird beispielsweise erkannt, dass ein Lebensmittelträger einer ersten Art eingeschoben oder entnommen wird, und ist in der Steuergeräteanordnung hinterlegt, dass ein Lebensmittelträger der ersten Art lediglich in den ersten Einschub eingeschoben werden kann - oder üblicherweise in den ersten Einschub eingeschoben wird - so kann daraus geschlossen werden, wenn die Einschubzone bekannt ist, in welchen konkreten Einschub eingeschoben wurde bzw. aus welchem konkreten Einschub entnommen wurde.

Deshalb sieht das Verfahren vor, dass mittels der Steuergeräteanordnung folgendes erfolgt:
Zuordnen der Einschubzone zum eingeschobenen oder entnommenen Lebensmittelträger basierend auf der erkannten Einschubhöhe und Zuordnen des eingeschobenen oder entnommenen Lebensmittelträgers zum verwendeten Einschub innerhalb der zugeordneten Einschubzone basierend auf der erkannten Art des Lebensmittelträgers.

Dabei ist in der Steuergeräteanordnung hinterlegt, welche Einschubzone sich auf welcher Einschubhöhe bzw. welchem Einschubhöhenbereich befindet und welche Art des Lebensmittelträgers zu welchem Einschub zuzuordnen ist. Wie eingangs erwähnt muss das Verfahren nicht zu 100 Prozent den richtigen Einschub zuordnen, sondern soll dies nur mit einer ausreichend großen Wahrscheinlichkeit machen. Insofern ist es beispielsweise auch nicht relevant, wenn ein Lebensmittelträger einer bestimmten Art in unterschiedliche Einschübe passt, sofern in der Steuergeräteanordnung beispielsweise hinterlegt ist, zu welchem Einschub eine solche Art von Lebensmittelträger üblicherweise oder meistens verwendet wird.

Nach dem Zuordnen des eingeschobenen oder entnommenen Lebensmittelträgers zu einem bestimmten Einschub innerhalb einer bestimmten Einschubzone erfolgt im Rahmen des Verfahrens vorzugsweise ein Anzeigen des zugeordneten Einschubs und/oder der zugeordneten Einschubzone, und/oder ein Ansteuern des Lebensmittelbehandlungsgerätes basierend auf dem zugeordneten Einschub und/oder der zugeordneten Einschubzone. Sowohl die Anzeige als auch die Ansteuerung kann mittels der Steuergeräteanordnung erfolgen. Für die Anzeige ist insbesondere vorgesehen, dass die Steuergeräteanordnung ein Display des Lebensmittelbehandlungsgerätes steuert. Das Ansteuern des Lebensmittelbehandlungsgerätes basierend auf dem zugeordneten Einschub und/oder der zugeordneten Einschubzone bedeutet beispielsweise, dass ein entsprechendes Garprogramm zur Behandlung der Lebensmittel automatisch ausgewählt und gestartet oder beendet wird.

Im Folgenden werden mögliche Verfahrensschritte beschrieben, die das Erkennen der Art des Lebensmittelträgers ermöglichen. Diese Verfahrensschritte können einzelnen oder in Kombination miteinander verwendet werden. Insbesondere die Kombination mehrerer dieser Schritte ermöglicht es, das Erkennen genauer auszugestalten:
(i) Das Erkennen der Art des Lebensmittelträgers umfasst somit das Ermitteln der Tiefe des Lebensmittelträgers. Dies wiederum erfolgt durch Ermitteln des Abstandes des Randes des Lebensmittelträgers und des Bodens des Lebensmittelträgers von der Kamera bzw. dem Abstandssensor. Dies erfolgt insbesondere während der Lebensmittelträger in den Lebensmittelaufnahmeraum eingeschoben oder aus diesem entnommen wird. Beispielsweise wird hierzu der zeitliche Verlauf des gemessenen oder ermittelten Abstandes betrachtet. Wird der Lebensmittelträger eingeschoben oder entnommen, so erfasst die Kamera bzw. der Abstandssensor zunächst den Abstand zum Rand des Lebensmittelträgers und daraufhin den Abstand zum Boden des Lebensmittelträgers. Aus den beiden Abständen kann eine Differenz ermittelt werden, die im Wesentlichen der Tiefe des Lebensmittelträgers entspricht. In der Steuergeräteanordnung kann hinterlegt sein, welche Differenz welcher Art von Lebensmittelträger zugeordnet ist. Dadurch ist es beispielsweise möglich zu erkennen, dass ein tiefer Lebensmittelträger, beispielsweise mit einer Tiefe von 6,5 cm, eingeschoben oder entnommen wurde. In der Steuergeräteanordnung kann hinterlegt werden, dass eine solche Art von Lebensmittelträger bevorzugt in den ersten Einschub eingeschoben wird.
(ii) Ferner ist es möglich, das Erkennen der Art des Lebensmittelträgers mittels einer Bilderkennungssoftware basierend auf Aufnahmen des Lebensmittelträgers oder Teilen des Lebensmittelträgers mit der Kamera zu ermöglichen. Hierzu kann die Bilderkennungssoftware beispielsweise Teile des erfassten Bildes mit einer Datenbank vergleichen und dadurch ermitteln, um welche Art von Lebensmittelträger es sich handelt.
(iii) Darüber hinaus ist es auch möglich, basierend auf dem erkannten Lebensmittel, welches sich auf dem Lebensmittelträger befindet, darauf zu schließen, um welche Art von Lebensmittelträger es sich handelt. Wird beispielsweise erkannt, dass Kartoffeln eingeschoben oder entnommen werden, so kann mit ausreichender Wahrscheinlichkeit darauf geschlossen werden, dass es sich um einen tiefen Lebensmittelträger handelt. Wird hingegen erkannt, dass beispielsweise Speckstreifen eingeschoben oder entnommen werden, so kann darauf geschlossen werden, dass es sich um einen flachen Lebensmittelträger handelt. So sieht das Verfahren bevorzugt vor, dass zum Erkennen der Art des Lebensmittelträgers erkannt wird, welche Art des Lebensmittels auf dem Lebensmittelträger angeordnet wird. Dies erfolgt ebenfalls mit einer Bilderkennungssoftware basierend auf Aufnahmen des Lebensmittels oder Teilen des Lebensmittels mittels der Kamera, wobei in der Steuergeräteanordnung hinterlegt ist, welche Art von Lebensmittelträger für das erkannte Lebensmittel genutzt wird.

Die Erfindung umfasst ferner ein Lebensmittelbehandlungsgerät. Dieses ist insbesondere zur Durchführung des beschriebenen Verfahrens ausgebildet. Bei dem Lebensmittelbehandlungsgerät handelt es sich insbesondere um ein Gargerät, Warmhaltegerät oder Kühlgerät. Das Lebensmittelbehandlungsgerät weist einen Lebensmittelaufnahmeraum auf. In diesem befindet sich das Einhängegestell. Dabei handelt es sich insbesondere um das Einhängegestell, wie es in vorliegender Beschreibung und/oder den Ansprüchen definiert ist. Wie im Rahmen des Verfahrens beschrieben wurde, befindet sich das Einhängegestell im Lebensmittelaufnahmeraum und weist mehrere übereinander angeordnete Einschubzonen auf, wobei zumindest zwei der Einschubzonen jeweils einen ersten Einschub zum Einschieben eines Lebensmittelträgers einer ersten Art und einen unter oder über dem ersten Einschub angeordneten zweiten Einschub zum Einschieben eines Lebensmittelträgers einer zweiten Art umfasst.

Ferner weist das Lebensmittelbehandlungsgerät die Steuergeräteanordnung auf, wie sie im Rahmen des Verfahrens definiert wurde.

Das Lebensmittelbehandlungsgerät umfasst die Kamera und/oder den Abstandssensor, die zusammen mit der Steuergeräteanordnung dazu ausgebildet sind, die Einschubhöhe eines in das Einhängegestell eingeschobenen Lebensmittelträgers und/oder eines aus dem Einhängegestell entnommenen Lebensmittelträgers zu erkennen, insbesondere während der Lebensmittelträger in den Lebensmittelaufnahmeraum eingeschoben oder entnommen wird. Ferner sind die Kamera und/oder der Abstandssensor zusammen mit der Steuergeräteanordnung dazu ausgebildet, die Art des eingeschobenen und/oder entnommen Lebensmittelträgers zu erkennen, besonders während der Lebensmittelträger in den Lebensmittelaufnahmeraum eingeschoben wird.

Die Steuergeräteanordnung ist ausgebildet zum Zuordnen der Einschubzone zum eingeschobenen Lebensmittelträger und/oder zum entnommenen Lebensmittelträger basierend auf der erkannten Einschubhöhe und zum Zuordnen des eingeschobenen Lebensmittelträgers und/oder des entnommenen Lebensmittelträgers zum verwendeten Einschub innerhalb der zugeordneten Einschubzone basierend auf der erkannten Art des Lebensmittelträgers. Ferner ist die Steuergeräteanordnung ausgebildet zum Anzeigen des zugeordneten Einschubs und/oder der zugeordneten Einschubzone, und/oder zum Ansteuern des Lebensmittelbehandlungsgerätes basierend auf dem zugeordneten Einschub und/oder der zugeordneten Einschubzone.

Die Kamera und/oder der Abstandssensor sind am Lebensmittelbehandlungsgerät insbesondere derart angeordnet, um die Lebensmittelträger während des Einschiebens und/oder während des Entnehmens im Bereich der Öffnung des Lebensmittelaufnahmeraums zu erfassen. Insbesondere befinden sich die Kamera und/oder der Abstandssensor im Bereich der Öffnung des Lebensmittelaufnahmeraums.

Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: eine schematische Ansicht eines erfindungsgemäßen Lebensmittelbehandlungsgerätes mit erfindungsgemäßen Einhängegestell zur Durchführung des erfindungsgemäßen Verfahrens gemäß einem Ausführungsbeispiel,
- Fig. 2: das erfindungsgemäße Einhängegestell im Inneren des erfindungsgemäßen Lebensmittelbehandlungsgerätes gemäß dem Ausführungsbeispiel,
- Fig. 3: das erfindungsgemäße Einhängegestell gemäß dem Ausführungsbeispiel,
- Fig. 4: eine Seitenansicht des rechten Gestellteils des erfindungsgemäßen Einhängegestells gemäß dem Ausführungsbeispiel,
- Fig. 5: eine perspektivische Ansicht des rechten Gestellteils des erfindungsgemäßen Einhängegestells gemäß dem Ausführungsbeispiel, und
- Fig. 6: eine schematische Ansicht des erfindungsgemäßen Verfahrens gemäß dem Ausführungsbeispiel

Im Folgenden wird anhand der Figuren ein Lebensmittelbehandlungsgerät 100 mit darin angeordnetem Einhängegestell 1 beschrieben. Das Lebensmittelbehandlungsgerät 100 dient zur Durchführung eines Verfahrens 200. Soweit nicht im Detail anders erwähnt, wird im Folgenden stets auf alle Figuren Bezug genommen.

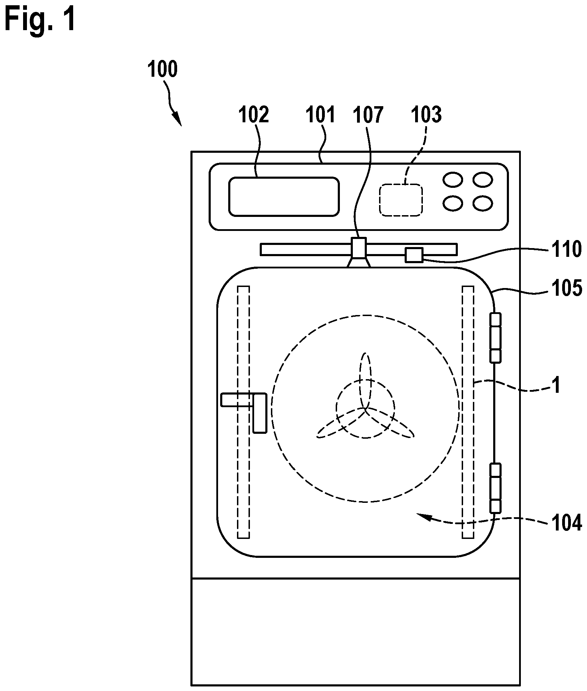

Figur 1 zeigt in schematischer Ansicht das Lebensmittelbehandlungsgerät 100, hier ausgebildet als Gargerät, insbesondere Kombi-Dämpfer. Das Lebensmittelbehandlungsgerät 100 umfasst eine Bedieneinheit 101, in der ein Display 102 angeordnet ist. Im Inneren des Lebensmittelbehandlungsgeräts 100 befindet sich eine Steuergeräteanordnung 103. Die Steuergeräteanordnung 103 kann teilweise oder vollständig auch außerhalb des Lebensmittelbehandlungsgerät 100, beispielsweise in einen Server, angeordnet sein.

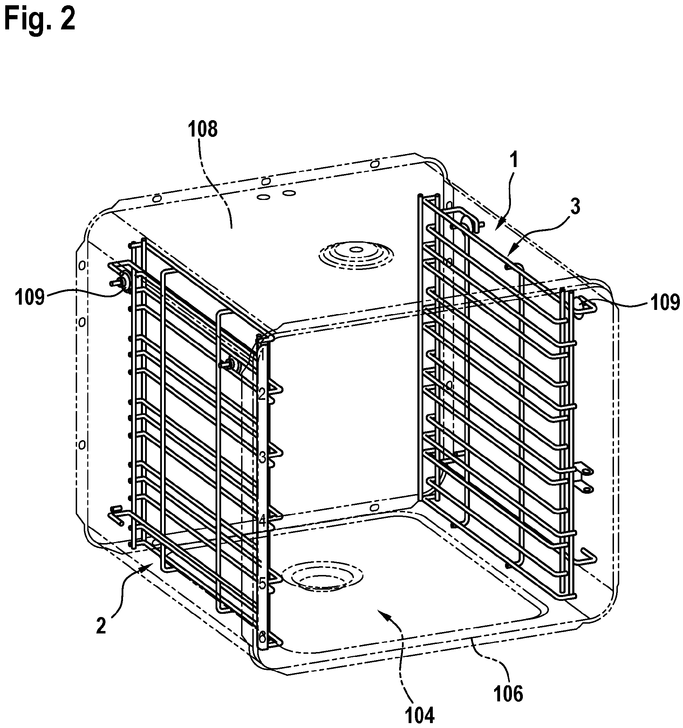

Das Lebensmittelbehandlungsgerät 100 weist einen Lebensmittelaufnahmeraum 104 auf, der durch eine Tür 105 verschlossen ist. Die Tür 105 verschließt eine Öffnung 106 (siehe Figur 2) des Lebensmittelaufnahmeraums 104. Im Bereich der Tür 105 bzw. der Öffnung 106 befinden sich eine Kamera 107 und ein Abstandssensor 110. Diese Kamera 107 filmt den Bereich der Öffnung 106. Der Abstandssensor 110 erfasst den Bereich der Öffnung 106. Anstatt des gezeigten Abstandssensors 110 oder zusätzlich dazu, kann mit der Kamera 107 der Abstand zu eingeschobenen Lebensmittelträgern ermittelt werden.

Im Lebensmittelaufnahmeraum 104 befindet sich ein Einhängegestell 1.

Figur 2 zeigt schematisch eine Innenraumwandung 108 des Lebensmittelaufnahmeraums 104 an dieser Innenraumwandung 108 befinden sich seitlich und gegenüberliegend Gestellhalterungen 109 zum werkzeuglosen Befestigen und werkzeuglosen Lösen des Einhängegestells 1.

Das Einhängegestell 1 umfasst ein linkes Gestellteil 2 und ein rechtes Gestellteil 3.

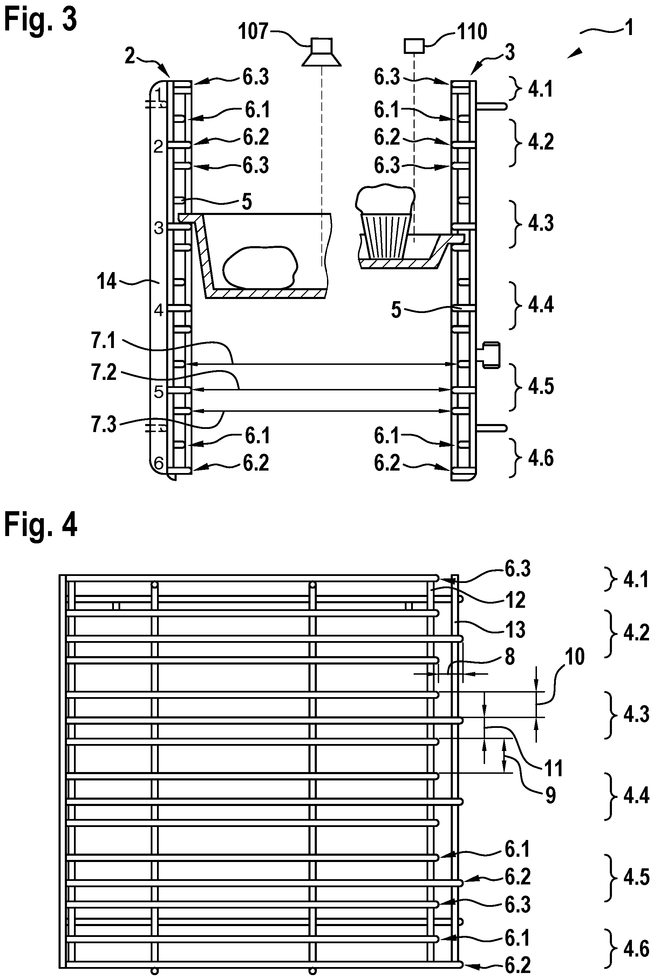

Figur 3 zeigt das Einhängegestell 1 mit dem linken Gestellteil 2 und dem rechten Gestellteil 3. Der horizontale Abstand der beiden Gestellteile 2, 3 ist nicht maßstabsgerecht dargestellt, um die Darstellung übersichtlich zu halten.

Das Einhängegestell 1 weist sechs übereinander angeordnete Einschubzonen 4.1 bis 4.6 auf.

Bei den Einschubzonen 4.2 bis 4.5 handelt es sich um vollständige Einschubzonen. Jede dieser Einschubzonen 4.2 bis 4.5 umfasst einen ersten Einschub 6.1, einen zweiten Einschub 6.2 und einen dritten Einschub 6.3. Jeder Einschub 6.1 bis 6.3 setzt sich zusammen aus einem Paar aus gegenüberliegenden Einschubelementen 5, hier ausgebildet als fest angeordnete Stangen aus Edelstahl.

Die erste Einschubzone 4.1 am oberen Ende des Einhängegestells 1 ist als obere Teil-Einschubzone ausgebildet. Diese weist nur den dritten Einschub 6.3 auf.

Die sechste Einschubzone 4.6 am unteren Ende des Einhängegestells 1 ist als untere Teil-Einschubzone ausgebildet und weist lediglich den ersten Einschub 6.1 und den zweiten Einschub 6.2 auf.

Figur 3 zeigt schematisch einen ersten horizontalen Abstand 7.1 zwischen den gegenüberliegenden Einschubelementen 5 des ersten Einschubs 6.1. Dementsprechend ist auch der zweite horizontale Abstand 7.2 des zweiten Einschubs 6.2 und der dritte horizontale Abstand 7.3 des dritten Einschubs 6.3 eingezeichnet. Der zweite und der dritte horizontale Abstand 7.2, 7.3 ist gleich groß. Der erste horizontale Abstand 7.1 ist größer als der zweite und dritte horizontale Abstand 7.2, 7.3.

Figur 4 zeigt die Seitenansicht, beispielhaft für das rechte Gestellteil 3. Folgende Ausgestaltungen gelten jedoch auch für das linke Gestellteil 2. Gemäß Figur 4 ragen die Einschubelemente 5 des zweiten Einschubs 6.2 mit einem Versatz 8 weiter nach vorne als die Einschubelemente 5 des ersten Einschubs 6.1 und des dritten Einschubs 6.3. Ferner zeigt Figur 4, dass das Einhängegestell 1 ein erstes Halteelement 12 und ein zweites Halteelement 13 umfasst. Die beiden Halteelemente 12, 13 sind vertikal ausgerichtete Stangen. Die Einschubelemente 5 der ersten und der dritten Einschübe 6.1, 6.3 sind am ersten Halteelement 12 befestigt. Die Einschubelemente 5 der zweiten Einschübe 6.2 sind am zweiten Halteelement 13 befestigt. Wie Figur 4 zeigt, kann das Einhängegestell 1 noch weitere vertikaler Halteelemente zur festen Anordnung der Einschubelemente 5 umfassen.

Figur 4 zeigt ferner einen Zonenabstand 9 zwischen dem ersten Einschub 6.1 einer jeden Einschubzone und dem dritten Einschub 6.3 der unmittelbar darüberliegenden Einschubzone.

Darüber hinaus zeigt Figur 4 einen oberen Einschubabstand 10 zwischen dem ersten Einschub 6.1 und dem zweiten Einschub 6.2 innerhalb einer jeden vollständigen Einschubzone und einen unteren Einschubabstand 11 zwischen dem zweiten Einschub 6.2 und dem dritten Einschub 6.3 innerhalb einer jeden vollständigen Einschubzone. Der Zonenabstand 9 ist größer als jeder Einschubabstand, also insbesondere der obere Einschubabstand 10 und der untere Einschubabstand 11.

Figur 3 verdeutlicht, dass das Einhängegestell 1 zumindest an einer Seite eine Markierungsleiste 14 aufweisen kann. Hier ist die Markierungsleiste 14 ein Blechstreifen mit ausgeschnittenen Zahlen zur Markierung der Einschubzonen 4.1 bis 4.6. Alternative Markierungstechniken, wie z. B. Ätzung u. a. sind möglich.

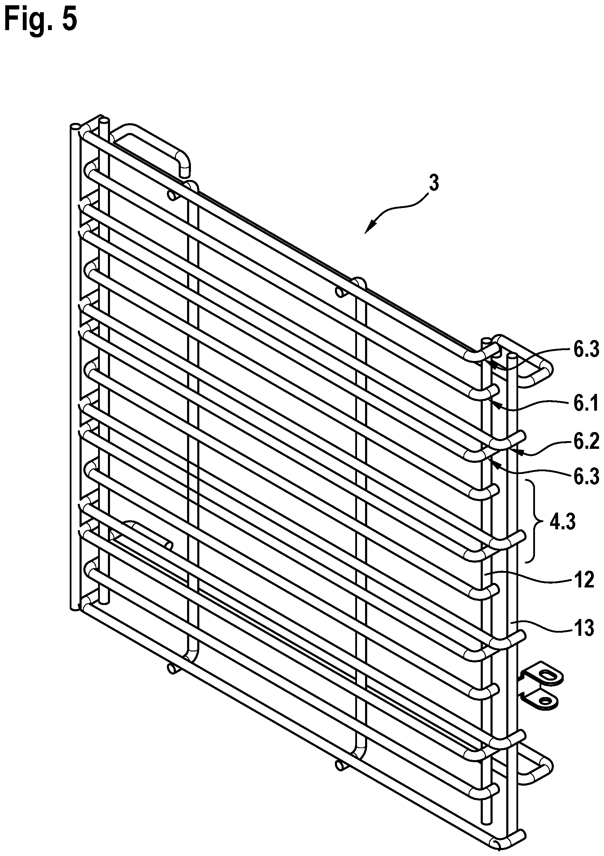

Figur 5 zeigt, dass rechte Gestellteil 3 in einer perspektivischen Ansicht.

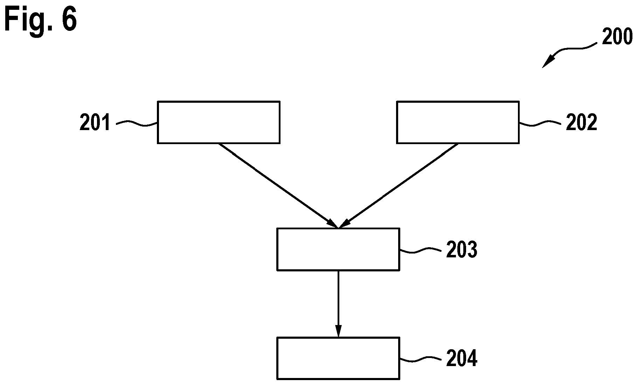

Figur 6 verdeutlicht schematisch das Verfahren 200. Bei dem Verfahren 200 handelt es sich um das Verfahren, wie es im allgemeinen Teil der Beschreibung erläutert wurde, mit folgenden Schritten:
201: Erkennen einer Einschubhöhe eines in das Einhängegestell 1 eingeschobenen Lebensmittelträgers oder eines aus dem Einhängegestell 1 entnommene Lebensmittelträgers mittels der Kamera 107 und/oder des Abstandssensors 110 in Verbindung mit der Steuergeräteanordnung 103,
202: Erkennen der Art des eingeschobenen oder entnommenen Lebensmittelträgers mittels der Kamera 107 und/oder des Abstandssensors in Verbindung mit der Steuergeräteanordnung 103,
203 Zuordnen, mittels der Steuergeräteanordnung 103, der Einschubzone 4.1 bis 4.6 zum eingeschobenen oder entnommenen Lebensmittelträger basierend auf der erkannten Einschubhöhe und Zuordnen, mittels der Steuergeräteanordnung 103, des eingeschobenen oder entnommenen Lebensmittelträgers zum verwendeten Einschub 6.1 bis 6.3 innerhalb der zugordneten Einschubzone 4.1 bis 4.6 basierend auf der erkannten Art des Lebensmittelträgers, wobei in der Steuergeräteanordnung 103 hinterlegt ist, welche Einschubzone 4.1 bis 4.6 sich auf welcher Einschubhöhe befindet und welche Art des Lebensmittelträgers zu welchem Einschub 6.1 bis 6.3 zuzuordnen ist,
204: Anzeigen des zugordneten Einschubs 6.1 bis 6.3 und/oder der zugeordneten Einschubzone 4.1 bis 4.6, und/oder Ansteuern des Lebensmittelbehandlungsgerätes 100 basierend auf dem zugordneten Einschub 6.1 bis 6.3 und/oder der zugeordneten Einschubzone 4.1 bis 4.6 mittels der Steuergeräteanordnung 103.

Fig. 3 zeigt in der linken Hälfte einen tiefen Lebensmittelträger - hier einen GN Behälter mit 65mm Tiefe und darauf angeordneten Kartoffeln. In der rechten Hälfte zeigt Fig. 3 einen flachen Lebensmittelträger - hier ein Blech mit 20mm Tiefe und darauf angeordneten Muffins. Es ist zu sehen, dass die Tiefe des Lebensmittelträgers ein Mehrfaches der Einschubabstände 10, 11 betragen kann. Deshalb ist bei dem hier vorgestellten Verfahren vorzugweise vorgesehen, die Art des Lebensmittelträgers, uns insbesondre dessen Tiefe, bei der Zuordnung des Einschubs zu berücksichtigen.

Die Erfindung ist ferner durch folgende Punkte definiert:
1. Einhängegestell (1) zum Einschieben von Lebensmittelträgern, insbesondere Blechen, in einen Lebensmittelaufnahmeraum (104), umfassend:
   - mehrere übereinander angeordnete Einschubzonen (4.1 bis 4.6), wobei jede Einschubzone (4.1 bis 4.6) zumindest einen Einschub (6.1 bis 6.3) aufweist, wobei jeder Einschub (6.1 bis 6.3) ein Paar aus zwei gegenüberliegenden Einschubelementen (5) auf gleicher Höhe zum Einschieben eines Lebensmittelträgers aufweist,
   - wobei zumindest zwei der Einschubzonen (4.2 bis 4.5) als vollständige Einschubzonen ausgebildet sind,
   - wobei jede vollständige Einschubzone (4.2 bis 4.5) einen ersten Einschub (6.1) aufweist, bei dem die gegenüberliegenden Einschubelemente (5) einen ersten horizontalen Abstand (7.1) zueinander haben,
   - und wobei jede vollständige Einschubzone (4.2 bis 4.5) einen zweiten Einschub (6.2) aufweist, bei dem die gegenüberliegenden Einschubelemente (5) einen zweiten horizontalen Abstand (7.2) zueinander haben,
   - wobei der erste horizontale Abstand (7.1) größer ist als der zweite horizontale Abstand (7.2)
2. Einhängegestell nach Punkt 1, wobei jede vollständige Einschubzone (4.2 bis 4.5) einen dritten Einschub (6.3) aufweist, bei dem die gegenüberliegenden Einschubelemente (5) einen dritten horizontalen Abstand (7.3) zueinander haben, wobei der zweite horizontale Abstand (7.2) vorzugsweise gleich dem dritten horizontalen Abstand (7.3) ist.
3. Einhängestell nach einem der vorhergehenden Punkte, wobei die Einschubelemente (5) des zweiten Einschubs (6.2) weiter nach vorne ragen als die Einschubelemente (5) des ersten Einschubs (6.1) und/oder als die Einschubelemente (5) des dritten Einschubs (6.3).
4. Einhängestell nach Punkt 3, umfassend beidseitig ein vertikales erstes Haltelement (12), an dem die vorderen Enden der Einschubelemente (5) des ersten Einschubs (6.1) und/oder des dritten Einschubs (6.3) befestigt sind, und umfassend beidseitig ein vertikales zweites Haltelement (13), an dem die vorderen Enden der Einschubelemente (5) des zweiten Einschubs (6.2) befestigt sind.
5. Einhängestell nach einem der vorhergehenden Punkte, wobei ein vertikaler Zonenabstand (9) benachbarter Einschubzonen (4.1 bis 4.6) definiert ist, als Abstand des obersten Einschubs (6.1) einer Einschubzone zum untersten Einschub (6.3) der darüberliegenden Einschubzone, wobei der vertikale Zonenabstand (9) größer ist als jeder vertikale Einschubabstand (10, 11) zwischen benachbarten Einschüben (6.1 bis 6.3) innerhalb der Einschubzonen (4.1 bis 4.6).
6. Einhängestell nach einem der vorhergehenden Punkte, wobei die oberste Einschubzone (4.1) als obere Teil-Einschubzone ausgebildet ist, die weniger Einschübe (6.1 bis 6.3) aufweist als jede einzelne vollständige Einschubzone (4.1 bis 4.5); insbesondere wobei die obere Teil-Einschubzone lediglich den dritten Einschub (6.3) aufweist.
7. Einhängestell nach einem der vorhergehenden Punkte, wobei die unterste Einschubzone (4.6) als untere Teil-Einschubzone ausgebildet ist, die weniger Einschübe aufweist als jede einzelne vollständige Einschubzone (4.2 bis 4.5); insbesondere wobei die untere Teil-Einschubzone lediglich den ersten Einschub (6.1) und den zweiten Einschub (6.2) aufweist.
8. Einhängestell nach einem der vorhergehenden Punkte, umfassend eine vertikale Markierungsleiste (14) mit Markierungen zur optischen Identifikation und Unterscheidung der einzelnen Einschubzonen (4.1 bis 4.6) durch einen Benutzer; insbesondere wobei die Markierungsleiste als ein Blechstreifen mit Nummern ausgebildet ist.
9. Lebensmittelbehandlungsgerät (100), insbesondere Gargerät, mit einem Lebensmittelaufnahmeraum (104), umfassend ein Einhängegestell (101) nach einem der vorhergehenden Punkte im Lebensmittelaufnahmeraum (104).
10. Verfahren (200) zum Betrieb eines Lebensmittelbehandlungsgerätes (100) mit einem Einhängegestell (1), insbesondere dem Einhängegestell (1) nach einem der Punkte 1 bis 8, in einem Lebensmittelaufnahmeraum (104),
   - wobei das Einhängegestell (1) mehrere übereinander angeordnete Einschubzonen (4.1 bis 4.6) umfasst, wobei zumindest zwei der Einschubzonen jeweils einen ersten Einschub (6.1) zum Einschieben eines Lebensmittelträgers einer ersten Art und einen unter oder über dem ersten Einschub (6.1) angeordneten zweiten Einschub (6.2) zum Einschieben eines Lebensmittelträgers einer zweiten Art umfasst,
      wobei das Verfahren folgende Schritte umfasst:
   - Erkennen einer Einschubhöhe eines in das Einhängegestell (1) eingeschobenen Lebensmittelträgers oder aus dem Einhängegestell (1) entnommenen Lebensmittelträgers mittels einer Kamera (107) und/oder eines Abstandssensors (110) in Verbindung mit einer Steuergeräteanordnung (103), insbesondere während der Lebensmittelträger in den Lebensmittelaufnahmeraum (104) eingeschoben oder aus dem Lebensmittelraum (104) entnommen wird,
   - Erkennen der Art des eingeschobenen Lebensmittelträgers mittels der Kamera (107) und/oder des Abstandssensors (110) in Verbindung mit der Steuergeräteanordnung (103), insbesondere während der Lebensmittelträger in den Lebensmittelaufnahmeraum (104) eingeschoben oder aus dem Lebensmittelraum (104) entnommen wird,
   - Zuordnen, mittels der Steuergeräteanordnung (103), der Einschubzone (4.1 bis 4.6) zum eingeschobenen oder entnommenen Lebensmittelträger basierend auf der erkannten Einschubhöhe und Zuordnen, mittels der Steuergeräteanordnung (103), des eingeschobenen oder entnommenen Lebensmittelträgers zum verwendeten Einschub (6.1 bis 6.3) innerhalb der zugordneten Einschubzone (4.1 bis 4.6) basierend auf der erkannten Art des Lebensmittelträgers, wobei in der Steuergeräteanordnung (103) hinterlegt ist, welche Einschubzone (4.1 bis 4.6) sich auf welcher Einschubhöhe befindet und welche Art des Lebensmittelträgers zu welchem Einschub(6.1 bis 6.3) zuzuordnen ist,
   - Anzeigen des zugordneten Einschubs (6.1 bis 6.3) und/oder der zugeordneten Einschubzone (4.1 bis 4.6), und/oder Ansteuern des Lebensmittelbehandlungsgerätes (100) basierend auf dem zugordneten Einschub (6.1 bis 6.3) und/oder der zugeordneten Einschubzone (4.1 bis 4.6) mittels der Steuergeräteanordnung (103).
11. Verfahren nach Punkt 10, wobei das Erkennen der Art des Lebensmittelträgers umfasst:
   - Ermitteln der Tiefe des Lebensmittelträgers durch Ermitteln des Abstandes des Randes des Lebensmittelträgers und des Bodens des Lebensmittelträgers von der Kamera (107) und/oder dem Abstandssensor (110), insbesondere während der Lebensmittelträger in den Lebensmittelaufnahmeraum (104) eingeschoben oder aus dem Lebensmittelraum (104) entnommen wird, und Erkennen der Art des Lebensmittelträgers basierend auf der Differenz des Abstandes zum Rand und des Abstandes zum Boden, wobei in der Steuergeräteanordnung (103) hinterlegt ist, welche Differenz welcher Art von Lebensmittelträger zugeordnet ist,
   - und/oder Erkennen der Art des Lebensmittelträgers mittels einer Bilderkennungssoftware basierend auf Aufnahmen des Lebensmittelträgers oder Teilen des Lebensmittelträgers mittels der Kamera (107),
   - und/oder Erkennen der Art des Lebensmittels auf dem Lebensmittelträger mittels einer Bilderkennungssoftware basierend auf Aufnahmen des Lebensmittels oder Teilen des Lebensmittels mittels der Kamera (107), wobei in der Steuergeräteanordnung (103) hinterlegt ist, welche Art von Lebensmittelträger für das erkannte Lebensmittel benutzt wird.
12. Lebensmittelbehandlungsgerät (100), insbesondere ausgebildet zur Durchführung des Verfahrens nach einem der Punkte 10 oder 11, insbesondere Gargerät, mit einem Lebensmittelaufnahmeraum (104) umfassend:
   - ein Einhängegestell (1), insbesondere nach einem der Punkte 1 bis 8, im Lebensmittelaufnahmeraum (104), wobei das Einhängestell (1) mehrere übereinander angeordnete Einschubzonen (4.1 bis 4.6) umfasst, wobei zumindest zwei der Einschubzonen jeweils einen ersten Einschub (6.1) zum Einschieben eines Lebensmittelträgers einer ersten Art und einen unter oder über dem ersten Einschub angeordneten zweiten Einschub (6.2) zum Einschieben eines Lebensmittelträgers einer zweiten Art umfasst,
   - eine Steuergeräteanordnung (103),
   - eine Kamera (107) und/oder einen Abstandssensor, die zusammen mit der Steuergeräteanordnung (103) ausgebildet sind zum Erkennen der Einschubhöhe eines in das Einhängegestell (1) eingeschobenen Lebensmittelträgers und/oder eines aus dem Einhängegestell (1) entnommenen Lebensmittelträgers, insbesondere während der Lebensmittelträger in den Lebensmittelaufnahmeraum eingeschoben oder aus dem Lebensmittelraum entnommen wird,
   - und zum Erkennen der Art des eingeschobenen Lebensmittelträgers und/oder des entnommen Lebensmittelträgers, insbesondere während der Lebensmittelträger in den Lebensmittelaufnahmeraum (104) eingeschoben oder aus dem Lebensmittelraum entnommen wird,
   - wobei die Steuergeräteanordnung (103) ausgebildet ist zum Zuordnen der Einschubzone (4.1 bis 4.6) zum eingeschobenen Lebensmittelträger und/oder zum entnommenen Lebensmittelträger basierend auf der erkannten Einschubhöhe und zum Zuordnen des eingeschobenen Lebensmittelträgers und/oder des entnommene Lebensmittelträgers zum verwendeten Einschub innerhalb der zugeordneten Einschubzone (4.1 bis 4.6) basierend auf der erkannten Art des Lebensmittelträgers,
   - wobei die Steuergeräteanordnung (103) ausgebildet ist zum Anzeigen des zugordneten Einschubs (6.1 bis 6.3) und/oder der zugeordneten Einschubzone (4.1 bis 4.6) und /oder zum Ansteuern des Lebensmittelbehandlungsgerätes (100) basierend auf dem zugordneten Einschub (6.1 bis 6.3) und/oder der zugeordneten Einschubzone (4.1 bis 4.6).
13. Lebensmittelbehandlungsgerät nach Punkt 12, wobei die Kamera (107) und/oder der Abstandssensor (110) angeordnet sind, um die Lebensmittelträger während des Einschiebens und/oder währen der Entnahme im Bereich der Öffnung des Lebensmittelaufnahmeraums (104) zu erfassen.

### Bezugszeichenliste

- 1: Einhängegestell
- 2: linkes Gestellteil
- 3: rechtes Gestellteil
- 4.1 bis 4.6: Einschubzonen
- 5: Einschubelemente
- 6.1 bis 6.3: Einschübe
- 7.1 bis 7.3: horizontale Abstände
- 8: Versatz
- 9: Zonenabstand
- 10: oberer Einschubabstand
- 11: unterer Einschubabstand
- 12: erstes Haltelement
- 13: zweites Haltelement
- 14: Markierungsleiste

- 100: Lebensmittelbehandlungsgerät
- 101: Bedieneinheit
- 102: Display
- 103: Steuergeräteanordnung
- 104: Lebensmittelaufnahmeraum
- 105: Tür
- 106: Öffnung
- 107: Kamera (ggf. mit integriertem Abstandssensors)
- 108: Innenraumwandung
- 109: Gestellhalterung
- 110: Abstandssensor
- 200: Verfahren
- 201 bis 204: Verfahrensschritte

## Patentansprüche

1. Verfahren (200) zum Betrieb eines Lebensmittelbehandlungsgerätes (100) mit einem Einhängegestell (1) in einem Lebensmittelaufnahmeraum (104),
• wobei das Einhängegestell (1) mehrere übereinander angeordnete Einschubzonen (4.1 bis 4.6) umfasst, wobei zumindest zwei der Einschubzonen jeweils einen ersten Einschub (6.1) zum Einschieben eines Lebensmittelträgers einer ersten Art und einen unter oder über dem ersten Einschub (6.1) angeordneten zweiten Einschub (6.2) zum Einschieben eines Lebensmittelträgers einer zweiten Art umfasst,
wobei das Verfahren folgende Schritte umfasst:
• Erkennen einer Einschubhöhe eines in das Einhängegestell (1) eingeschobenen Lebensmittelträgers oder aus dem Einhängegestell (1) entnommenen Lebensmittelträgers mittels einer Kamera (107) und/oder eines Abstandssensors (110) in Verbindung mit einer Steuergeräteanordnung (103), insbesondere während der Lebensmittelträger in den Lebensmittelaufnahmeraum (104) eingeschoben oder aus dem Lebensmittelraum (104) entnommen wird,
• Erkennen der Art des eingeschobenen Lebensmittelträgers mittels der Kamera (107) und/oder des Abstandssensors (110) in Verbindung mit der Steuergeräteanordnung (103), insbesondere während der Lebensmittelträger in den Lebensmittelaufnahmeraum (104) eingeschoben oder aus dem Lebensmittelraum (104) entnommen wird,
• Zuordnen, mittels der Steuergeräteanordnung (103), der Einschubzone (4.1 bis 4.6) zum eingeschobenen oder entnommenen Lebensmittelträger basierend auf der erkannten Einschubhöhe und Zuordnen, mittels der Steuergeräteanordnung (103), des eingeschobenen oder entnommenen Lebensmittelträgers zum verwendeten Einschub (6.1 bis 6.3) innerhalb der zugordneten Einschubzone (4.1 bis 4.6) basierend auf der erkannten Art des Lebensmittelträgers, wobei in der Steuergeräteanordnung (103) hinterlegt ist, welche Einschubzone (4.1 bis 4.6) sich auf welcher Einschubhöhe befindet und welche Art des Lebensmittelträgers zu welchem Einschub(6.1 bis 6.3) zuzuordnen ist,
• Anzeigen des zugordneten Einschubs (6.1 bis 6.3) und/oder der zugeordneten Einschubzone (4.1 bis 4.6), und/oder Ansteuern des Lebensmittelbehandlungsgerätes (100) basierend auf dem zugordneten Einschub (6.1 bis 6.3) und/oder der zugeordneten Einschubzone (4.1 bis 4.6) mittels der Steuergeräteanordnung (103).

2. Verfahren nach Anspruch 1, wobei das Erkennen der Art des Lebensmittelträgers umfasst:
• Ermitteln der Tiefe des Lebensmittelträgers durch Ermitteln des Abstandes des Randes des Lebensmittelträgers und des Bodens des Lebensmittelträgers von der Kamera (107) und/oder dem Abstandssensor (110), insbesondere während der Lebensmittelträger in den Lebensmittelaufnahmeraum (104) eingeschoben oder aus dem Lebensmittelraum (104) entnommen wird, und Erkennen der Art des Lebensmittelträgers basierend auf der Differenz des Abstandes zum Rand und des Abstandes zum Boden, wobei in der Steuergeräteanordnung (103) hinterlegt ist, welche Differenz welcher Art von Lebensmittelträger zugeordnet ist,
• und/oder Erkennen der Art des Lebensmittelträgers mittels einer Bilderkennungssoftware basierend auf Aufnahmen des Lebensmittelträgers oder Teilen des Lebensmittelträgers mittels der Kamera (107),
• und/oder Erkennen der Art des Lebensmittels auf dem Lebensmittelträger mittels einer Bilderkennungssoftware basierend auf Aufnahmen des Lebensmittels oder Teilen des Lebensmittels mittels der Kamera (107), wobei in der Steuergeräteanordnung (103) hinterlegt ist, welche Art von Lebensmittelträger für das erkannte Lebensmittel benutzt wird.

3. Lebensmittelbehandlungsgerät (100), insbesondere ausgebildet zur Durchführung des Verfahrens nach einem der Ansprüche 1 oder 2, insbesondere Gargerät, mit einem Lebensmittelaufnahmeraum (104) umfassend:
• ein Einhängegestell (1) im Lebensmittelaufnahmeraum (104), wobei das Einhängestell (1) mehrere übereinander angeordnete Einschubzonen (4.1 bis 4.6) umfasst, wobei zumindest zwei der Einschubzonen jeweils einen ersten Einschub (6.1) zum Einschieben eines Lebensmittelträgers einer ersten Art und einen unter oder über dem ersten Einschub angeordneten zweiten Einschub (6.2) zum Einschieben eines Lebensmittelträgers einer zweiten Art umfasst,
• eine Steuergeräteanordnung (103),
• eine Kamera (107) und/oder einen Abstandssensor, die zusammen mit der Steuergeräteanordnung (103) ausgebildet sind zum Erkennen der Einschubhöhe eines in das Einhängegestell (1) eingeschobenen Lebensmittelträgers und/oder eines aus dem Einhängegestell (1) entnommenen Lebensmittelträgers, insbesondere während der Lebensmittelträger in den Lebensmittelaufnahmeraum eingeschoben oder aus dem Lebensmittelraum entnommen wird,
• und zum Erkennen der Art des eingeschobenen Lebensmittelträgers und/oder des entnommen Lebensmittelträgers, insbesondere während der Lebensmittelträger in den Lebensmittelaufnahmeraum (104) eingeschoben oder aus dem Lebensmittelraum entnommen wird,
• wobei die Steuergeräteanordnung (103) ausgebildet ist zum Zuordnen der Einschubzone (4.1 bis 4.6) zum eingeschobenen Lebensmittelträger und/oder zum entnommenen Lebensmittelträger basierend auf der erkannten Einschubhöhe und zum Zuordnen des eingeschobenen Lebensmittelträgers und/oder des entnommene Lebensmittelträgers zum verwendeten Einschub innerhalb der zugeordneten Einschubzone (4.1 bis 4.6) basierend auf der erkannten Art des Lebensmittelträgers,
• wobei die Steuergeräteanordnung (103) ausgebildet ist zum Anzeigen des zugordneten Einschubs (6.1 bis 6.3) und/oder der zugeordneten Einschubzone (4.1 bis 4.6) und /oder zum Ansteuern des Lebensmittelbehandlungsgerätes (100) basierend auf dem zugordneten Einschub (6.1 bis 6.3) und/oder der zugeordneten Einschubzone (4.1 bis 4.6).

4. Lebensmittelbehandlungsgerät nach Anspruch 3, wobei die Kamera (107) und/oder der Abstandssensor (110) angeordnet sind, um die Lebensmittelträger während des Einschiebens und/oder währen der Entnahme im Bereich der Öffnung des Lebensmittelaufnahmeraums (104) zu erfassen.

5. Verfahren nach einem der Ansprüche 1 oder 2 oder Lebensmittelbehandlungsgerät nach einem der Ansprüche 3 oder 4, wobei das Einhängegestell (1) zum Einschieben von Lebensmittelträgern, insbesondere Blechen, in den Lebensmittelaufnahmeraum (104), umfasst:
• die mehrere übereinander angeordnete Einschubzonen (4.1 bis 4.6), wobei jede Einschubzone (4.1 bis 4.6) zumindest einen Einschub (6.1 bis 6.3) aufweist, wobei jeder Einschub (6.1 bis 6.3) ein Paar aus zwei gegenüberliegenden Einschubelementen (5) auf gleicher Höhe zum Einschieben eines Lebensmittelträgers aufweist,
• wobei zumindest zwei der Einschubzonen (4.2 bis 4.5) als vollständige Einschubzonen ausgebildet sind,
• wobei jede vollständige Einschubzone (4.2 bis 4.5) den ersten Einschub (6.1) aufweist, bei dem die gegenüberliegenden Einschubelemente (5) einen ersten horizontalen Abstand (7.1) zueinander haben,
• und wobei jede vollständige Einschubzone (4.2 bis 4.5) den zweiten Einschub (6.2) aufweist, bei dem die gegenüberliegenden Einschubelemente (5) einen zweiten horizontalen Abstand (7.2) zueinander haben,
• wobei der erste horizontale Abstand (7.1) größer ist als der zweite horizontale Abstand (7.2)

6. Verfahren oder Lebensmittelbehandlungsgerät nach Anspruch 5, wobei jede vollständige Einschubzone (4.2 bis 4.5) einen dritten Einschub (6.3) aufweist, bei dem die gegenüberliegenden Einschubelemente (5) einen dritten horizontalen Abstand (7.3) zueinander haben, wobei der zweite horizontale Abstand (7.2) vorzugsweise gleich dem dritten horizontalen Abstand (7.3) ist.

7. Verfahren oder Lebensmittelbehandlungsgerät nach einem der Ansprüche 5 oder 6, wobei die Einschubelemente (5) des zweiten Einschubs (6.2) weiter nach vorne ragen als die Einschubelemente (5) des ersten Einschubs (6.1) und/oder als die Einschubelemente (5) des dritten Einschubs (6.3).

8. Verfahren oder Lebensmittelbehandlungsgerät nach Anspruch 7, umfassend beidseitig ein vertikales erstes Haltelement (12), an dem die vorderen Enden der Einschubelemente (5) des ersten Einschubs (6.1) und/oder des dritten Einschubs (6.3) befestigt sind, und umfassend beidseitig ein vertikales zweites Haltelement (13), an dem die vorderen Enden der Einschubelemente (5) des zweiten Einschubs (6.2) befestigt sind.

9. Verfahren oder Lebensmittelbehandlungsgerät nach einem der Ansprüche 5 bis 8, wobei ein vertikaler Zonenabstand (9) benachbarter Einschubzonen (4.1 bis 4.6) definiert ist, als Abstand des obersten Einschubs (6.1) einer Einschubzone zum untersten Einschub (6.3) der darüberliegenden Einschubzone, wobei der vertikale Zonenabstand (9) größer ist als jeder vertikale Einschubabstand (10, 11) zwischen benachbarten Einschüben (6.1 bis 6.3) innerhalb der Einschubzonen (4.1 bis 4.6).

10. Verfahren oder Lebensmittelbehandlungsgerät nach einem der Ansprüche 5 bis 9, wobei die oberste Einschubzone (4.1) als obere Teil-Einschubzone ausgebildet ist, die weniger Einschübe (6.1 bis 6.3) aufweist als jede einzelne vollständige Einschubzone (4.1 bis 4.5); insbesondere wobei die obere Teil-Einschubzone lediglich den dritten Einschub (6.3) aufweist.

11. Verfahren oder Lebensmittelbehandlungsgerät nach einem der Ansprüche 5 bis 10, wobei die unterste Einschubzone (4.6) als untere Teil-Einschubzone ausgebildet ist, die weniger Einschübe aufweist als jede einzelne vollständige Einschubzone (4.2 bis 4.5); insbesondere wobei die untere Teil-Einschubzone lediglich den ersten Einschub (6.1) und den zweiten Einschub (6.2) aufweist.

12. Verfahren oder Lebensmittelbehandlungsgerät nach einem der Ansprüche 5 bis 11, umfassend eine vertikale Markierungsleiste (14) mit Markierungen zur optischen Identifikation und Unterscheidung der einzelnen Einschubzonen (4.1 bis 4.6) durch einen Benutzer; insbesondere wobei die Markierungsleiste als ein Blechstreifen mit Nummern ausgebildet ist.
